# EUROPEAN PATENT APPLICATION

(11) **EP 2 910 771 A1**
(43) Date of publication of application: **26.08.2015**
(21) Application number: 13828445.0
(22) Date of filing: 16.07.2013
(51) Int. Cl.: F03B 11/00, F03B 7/00

(54) **HYDROELECTRIC POWER GENERATION EQUIPMENT**

(30) Priority: 08.08.2012 JP 2012176500
(71) Applicant: THK CO., LTD., Tokyo 141-8503 (JP)
(72) Inventor: TERAMACHI, Akihiro, Tokyo 141-8503 (JP); ASO, Toshiyuki, Tokyo 141-8503 (JP); AIDA, Tomoyuki, Tokyo 141-8503 (JP); SAKUYAMA, Takashi, Tokyo 141-8503 (JP); HAYASAKA, Keisuke, Tokyo 141-8503 (JP)
(74) Representative: Grünecker Patent- und Rechtsanwälte PartG mbB
(86) International application number: PCT/JP2013/069277
(87) International publication number: WO 2014/024645

(57) **Abstract**

A hydroelectric power generation equipment (1) includes: a water wheel (10) that is disposed under a water surface (Ws); a power generator (55) that performs power generation using rotation of the water wheel (10); a movement guide unit (30) that has a shaft (31) disposed coaxially on a rotation center (A) of the water wheel (10) and such that the shaft (31) is movable in a direction of a rotating shaft of the power generator (55) to transmit rotation of the shaft (31) to the power generator (55); and a water wheel positioning unit (60) that moves the shaft (31) up or down according to a change in the water level (Ws).

## Description

### [Technical Field]

The present invention relates to hydroelectric power generation equipment.

Priority is claimed on Japanese Patent Application No. 2012-176500, filed on August 8, 2012, the content of which is incorporated herein by reference.

### [Background Art]

In power generation equipment using a vertical shaft water wheel (cross flow water wheel), even when a water level (water surface) rises or falls, it is necessary for a water wheel (blade section) to be disposed under a water surface (submerged) at all times. When a part of the water wheel is exposed above the water surface, a load applied to the water wheel becomes uneven, which may cause problems with the water wheel.

Thus, a technique by which the vertical shaft water wheel is disposed under the water surface at all times by fixing a power generator to a floating element floating on the water surface and disposing the water wheel at a bottom side (lower side) of the floating element is proposed (Patent Literature 1).

### [Citation List]

### [Patent Literature]

### [Patent Literature 1]

Japanese Examined Utility Model Application, Second Publication No. H01-10446

### [Summary of Invention]

### [Technical Problem]

In the related art, however, since the entire vertical shaft hydroelectric power generation equipment including the power generator is supported by the floating element, a large floating element capable of obtaining sufficient buoyancy is required. For this reason, there is a problem that the vertical shaft hydroelectric power generation equipment becomes larger. Further, since the entire vertical shaft hydroelectric power generation equipment floats on the water surface, there is a problem that an attitude of the entire equipment including the water wheel becomes unstable, and a problem that power generation can easily become unstable. Further, since the attitude of the entire equipment is unstable, there is a problem that maintainability and reliability are reduced.

The present invention is directed to providing hydroelectric power generation equipment that allows a water wheel to be reliably disposed under a water surface without making the equipment larger.

### [Solution to Problem]

A first aspect of hydroelectric power generation equipment according to the present invention includes: a water wheel disposed under a water surface; a power generator configured to perform power generation using rotation of the water wheel; a movement guide unit having a shaft coaxially disposed on a rotation center of the water wheel such that the shaft is movable in a direction of a rotating shaft of the power generator to transmit rotation of the shaft to the power generator; and a water wheel positioning unit configured to move the shaft up or down according to a change in water level.

A second aspect of the hydroelectric power generation equipment according to the present invention is configured such that, in the first aspect, the movement guide unit includes a barrel configured such that the shaft is movable in the direction of the rotating shaft while being fitted onto the shaft so as to non-rotatable about an axis, and a bearing configured to rotatably support the barrel above a water surface.

A third aspect of the hydroelectric power generation equipment according to the present invention is configured such that, in the second aspect, the power generator includes a magnet part coupled to the barrel, and a coil part configured to surround an outer circumference side of the magnet part.

A fourth aspect of the hydroelectric power generation equipment according to the present invention is configured such that, in any one of the first to third aspects, the water wheel positioning unit is a linear actuator coupled to the movement guide unit via the bearing.

A fifth aspect of the hydroelectric power generation equipment according to the present invention is configured such that, in any one of the first to third aspects, the water wheel positioning unit includes: a rack formed on the movement guide unit; a pinion engaged with the rack; and a rotary actuator configured to rotate the pinion.

A sixth aspect of the hydroelectric power generation equipment according to the present invention is configured such that, in any one of the first to third aspects, the water wheel positioning unit is a floating element coupled to the movement guide unit via the bearing.

### [Advantageous Effects of Invention]

In the hydroelectric power generation equipment according to the present invention, the water wheel can be reliably disposed under the water surface without making the equipment larger.

### [Brief Description of Drawings]

Fig. 1 is a view illustrating a schematic constitution of vertical shaft hydroelectric power generation equipment according to an embodiment of the present invention.
Fig. 2 is a view illustrating a movement guide unit and a fixing unit.
Fig. 3A is a view illustrating a detailed constitution of a rotary ball spline bearing which shows a spline shaft and a spline nut.
Fig. 3B is a view illustrating a detailed constitution of the rotary ball spline bearing which shows a pair of angular bearings.
Fig. 4A is a view illustrating an operation of the vertical shaft hydroelectric power generation equipment when a water level varies rises and falls, showing the case in which the water level of water flowing along an irrigation canal is low.
Fig. 4B is a view illustrating an operation of the vertical shaft hydroelectric power generation equipment when the water level rises and falls, showing the case in which the water level of the water flowing along the irrigation canal is high.
Fig. 5 is a view illustrating a first modified example of the water wheel positioning unit.
Fig. 6 is a view illustrating a second modified example of the water wheel positioning unit.

### [Description of Embodiments]

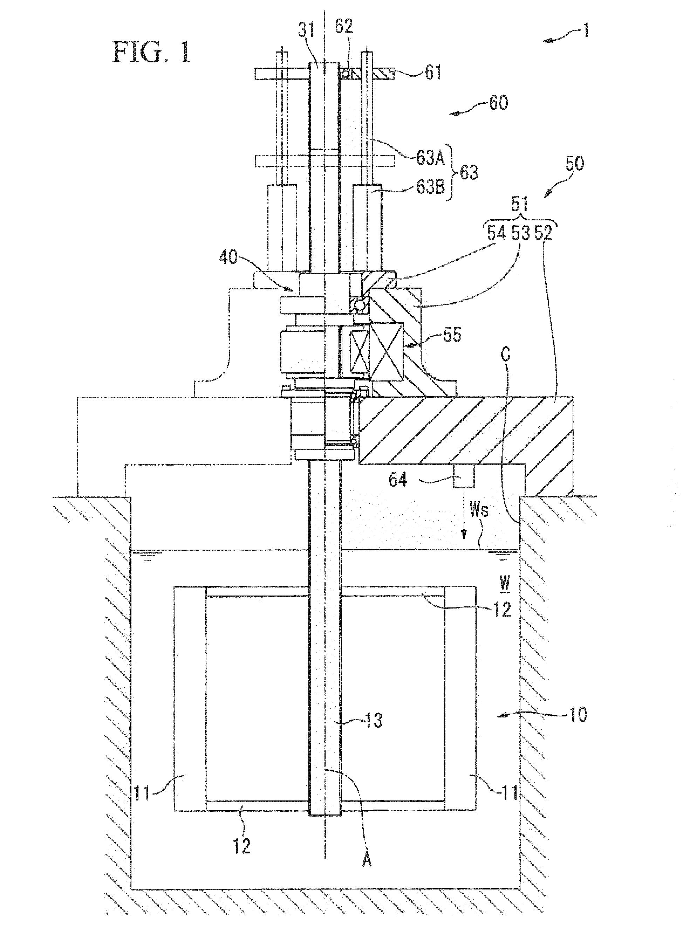

Fig. 1 is a view illustrating a schematic constitution of vertical shaft hydroelectric power generation equipment 1 according to an embodiment of the present invention.

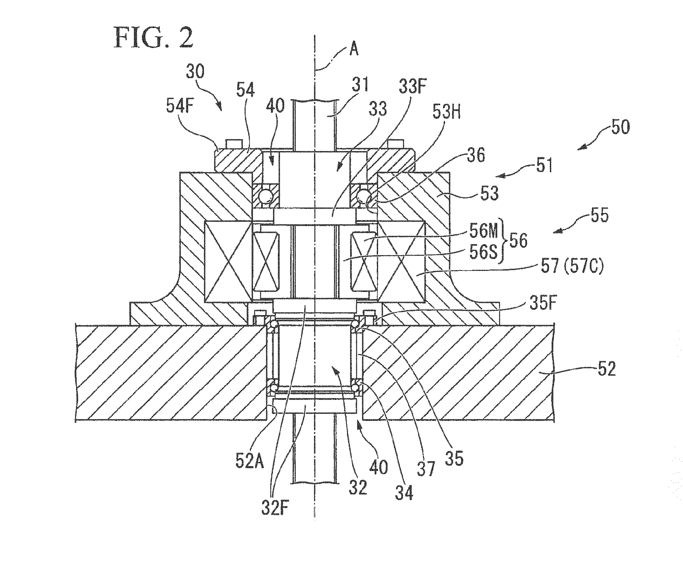

Fig. 2 is a view illustrating a movement guide unit 30 and a fixing unit 50.

Vertical shaft hydroelectric power generation equipment 1 is installed in an irrigation canal C used for, for instance, agriculture, industry, waterworks, or the like.

In the vertical shaft hydroelectric power generation equipment 1, a vertical shaft water wheel 10 is disposed below a water surface Ws of the irrigation canal C. The vertical shaft water wheel 10 is disposed underwater in the irrigation canal C.

The vertical shaft water wheel 10 is disposed such that a central axis (rotation center) A of a rotating shaft 13 faces in a vertical direction. A power generator 55 is indirectly coupled to a portion of the rotating shaft 13 which is exposed above water.

The power generator 55 converts torque (mechanical energy) of the vertical shaft water wheel 10 into electrical energy. The power generator 55 produces electric power using a force of the water W flowing along the irrigation canal C.

The vertical shaft hydroelectric power generation equipment 1 is equipped with the vertical shaft water wheel 10, a movement guide unit 30, a fixing unit 50, and a water wheel positioning unit 60.

The movement guide unit 30 can move the vertical shaft water wheel 10 in an upward/downward direction while transmitting rotation of the vertical shaft water wheel 10 to the power generator 55.

The fixing unit 50 is disposed above the irrigation canal C, supports the vertical shaft water wheel 10 and the movement guide unit 30, and produces electric power at the power generator 55.

The water wheel positioning unit 60 operates the movement guide unit 30 in response to a change in water level (water surface Ws).

The vertical shaft water wheel 10 is a so-called gyro-mill wind turbine. The vertical shaft water wheel 10 has a plurality of blades 11, each of which is shaped of a rectangular plate or a band plate and extends in a vertical direction. The vertical shaft water wheel 10 has the rotating shaft 13 disposed along the central axis A.

The plurality of blades 11 are arranged around the central axis A at regular intervals in a circumferential direction. Each blade 11 is coupled to an outer circumferential surface of the rotating shaft 13 via a pair of arms 12 connected to opposite ends thereof. The plurality of blades 11 are formed in a shape that generates a lift force when they receive the water W. Due to this lift force, the vertical shaft water wheel 10 (or the rotating shaft 13) is rotated about the central axis A.

The vertical shaft water wheel 10 is not dependent upon a direction in which the water flows. The vertical shaft water wheel 10 can be rotated about the central axis A with respect to the water W from any direction.

The movement guide unit 30 can move the vertical shaft water wheel 10 in a direction of the central axis A while being rotated together with the vertical shaft water wheel 10. The movement guide unit 30 can move the vertical shaft water wheel 10 in the upward/downward direction in response to the change of the water level (water surface Ws) while transmitting the rotation of the vertical shaft water wheel 10 to the power generator 55.

The movement guide unit 30 is equipped with a spline shaft 31, spline nuts 32 and 33, and a bearing 36.

The spline shaft (shaft) 31 is integrally formed with the rotating shaft 13. The spline nuts (barrels) 32 and 33 are disposed on the spline shaft 31. The bearing 36 is fitted onto the spline nut 33.

Bearings 34 and 35 and the bearing 36 support the spline nut 32 and the spline nut 33 so as to be rotatable relative to the fixing unit 50. The movement guide unit 30 is equipped with two rotary ball spline bearings 40 sharing one spline shaft 31.

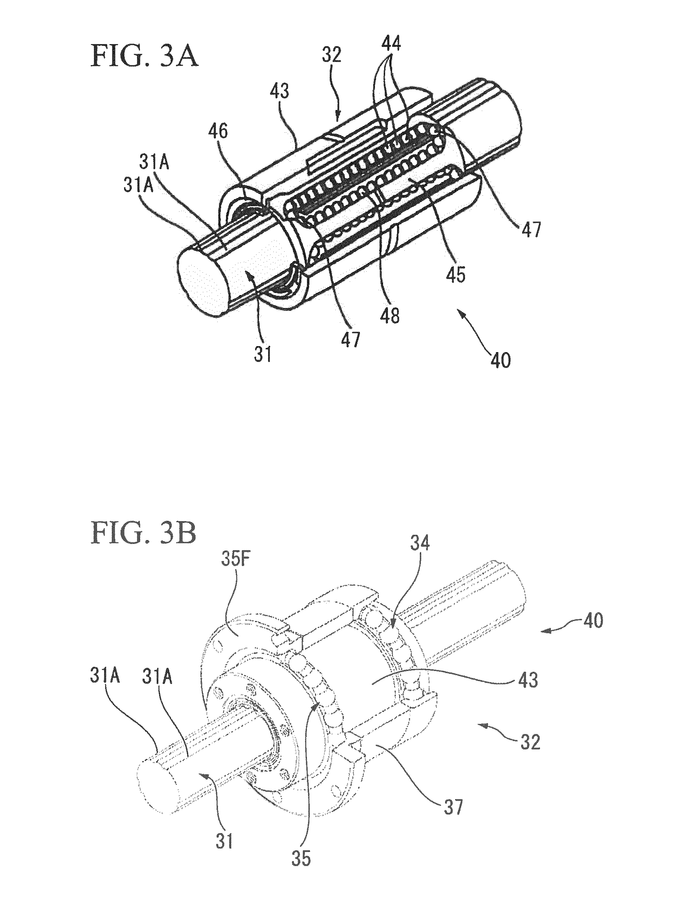

Fig. 3A is a view illustrating a detailed constitution of the rotary ball spline bearing 40 which shows the spline shaft 31 and the spline nut 32.

Fig. 3B is a view illustrating a detailed constitution of the rotary ball spline bearing 40 which shows a pair of angular bearings 34 and 35.

As illustrated in Fig. 3A, an outer circumferential surface of the spline shaft 31 is formed with a plurality of rolling element rolling grooves 31A that extend in an extending direction of the spline shaft 31. The plurality of rolling element rolling grooves 31A is at least formed at a position corresponding to the spline nut 32. The plurality of rolling element rolling grooves 31A is disposed at intervals in a circumferential direction.

A plurality of balls 44 of the spline nut 32 is rollably disposed in the rolling element rolling grooves 31A. The rolling element rolling grooves 31A are subjected to quenching in order to secure mechanical strength against the balls 44.

The spline nut 32 includes an outer casing 43, a plurality of balls 44, and a retainer 45. The outer casing 43 is loosely fitted around the spline shaft 31. The plurality of balls 44 are interposed between the spline shaft 31 and the outer casing 43 so as to enable a rolling motion. The retainer 45 is built into the outer casing 43, and arranges the plurality of balls 44 disposed in a ball circulation passage.

An inner circumferential surface of the outer casing 43 is formed with multiple sets of load rolling element rolling grooves that face the rolling element rolling grooves 31 A of the spline shaft 31 and extend in an extending direction of the outer casing 43. Axial opposite ends of the outer casing 43 are each provided with a snap ring 46 for assembling the retainer 45 into the outer casing 43.

The ball circulation passage is made up of a load rolling element rolling passage, a pair of turnaround passages 47, and a return passage (no-load rolling element rolling passage) 48. The ball circulation passage is of a flat annular or circuit shape.

The load rolling element rolling passage is made up of the rolling element rolling grooves 31A of the spline shaft 31 and the load rolling element rolling grooves of the outer casing 43. The pair of turnaround passages 47 are formed in the retainer 45. The return passage 48 is formed between the retainer 45 and the outer casing 43.

With the linear motion of the spline shaft 31 relative to the spline nut 32, the balls 44 perform the rolling motion along the load rolling element rolling passage.

After rolling up to one end of each load rolling element rolling groove, the balls 44 are scooped from each rolling element rolling groove 31A by the retainer 45. After the balls 44 go by way of one of the turnaround passages 47 having a U shape, the balls 44 change a direction and enter the return passage 48 extending in parallel to the load rolling element rolling groove.

After passing through the return passage 48, the balls 44 go by way of the other turnaround passage 47, and then return to the rolling element rolling groove 31A.

Since the return passage 48 is formed between the retainer 45 and the outer casing 43, the balls 44 are not in contact with the rolling element rolling groove 31A in the return passage 48.

The spline nut 32 and the spline shaft 31 can be moved relatively and linearly.

Meanwhile, since the plurality of balls 44 are interposed between the load rolling element rolling grooves of the spline nut 32 and the rolling element rolling grooves 31A of the spline shaft 31, the spline nut 32 restrains the spline shaft 31 from being rotated about its own axis.

In the spline nut 32 and the spline shaft 31, mutual relative rotation about the axis is restrained.

As illustrated in Fig. 3B, the bearings 34 and 35 are provided at opposite ends of the outer circumferential surface of the outer casing 43. This allows the spline shaft 31 and the spline nut 32 to be rotated about the axis as one body.

In the state in which the mutual relative rotation about the axis is restrained, the spline nut 32 and the spline shaft 31 are rotated about the axis as one body. When the spline shaft 31 rotates about the axis, the spline nut 32 (33) is also rotated about the axis as one body.

As illustrated in Figs. 1 and 2, the bearings 34, 35, and 36 of the movement guide unit 30 are fixed to the fixing unit 50. The bearings 34, 35, and 36 support the two rotary ball spline bearings 40 sharing one spline shaft 31 so as to be rotatable relative to the fixing unit 50.

The two spline nuts 32 and 33 are disposed above the water surface Ws side by side in a vertical direction. An upper end of the spline shaft 31 is inserted through the two spline nuts 32 and 33.

The bearings 34 and 35 are a pair of angular bearings. The bearing 36 is a radial bearing. The pair of angular bearings 34 and 35 are arranged at a lower side of the fixing unit 50, and the radial bearing 36 is arranged at an upper side of the fixing unit 50.

The power generator 55 is disposed between the two spline nuts 32 and 33. The power generator 55 is coupled to the spline nuts 32 and 33.

The pair of angular bearings 34 and 35 have no inner rings. Traveling grooves in which the balls of the angular bearings 34 and 35 roll are directly formed in the outer circumferential surface of the outer casing of the spline nut 32.

Flanges 32F are provided on opposite ends of the outer casing of the spline nut 32. The traveling grooves in which the balls of the bearings 34 and 35 roll are formed adjacent to the flanges 32F.

A cylindrical spacer 37 is provided between outer rings of the pair of angular bearings 34 and 35.

The radial bearing 36 is fitted into an outer casing of the spline nut 33. A flange 33F is provided on one end (lower end) of the outer casing of the spline nut 33. An inner ring of the radial bearing 36 is in contact with the flange 33F.

The fixing unit 50 includes a support frame 51, the power generator 55, and so on. The support frame 51 is crossed between both banks of the irrigation canal C. The support frame 51 supports the vertical shaft water wheel 10 and the movement guide unit 30.

The power generator 55 is provided inside the support frame 51.

The support frame 51 includes a support plate 52, a cylindrical casing part 53, and a ring member 54.

The support plate 52 is crossed between both banks of the irrigation canal C. The cylindrical casing part 53 is disposed on an upper surface of the support plate 52. The ring member 54 is disposed on an upper end face of the casing part 53.

The support plate 52 has a circular through-hole 52A formed in a vertical direction. The spline nut 32 is disposed in the through-hole 52A via the bearings 34 and 35. The through-hole 52A has approximately the same length as the spline nut 32, and the outer rings of the bearing 34 and 35 are fitted and disposed on an inner circumferential surface of the through-hole 52A. The bearing 34 is disposed at a lower side of the through-hole 52A, and the bearing 35 is disposed at an upper side of the through-hole 52A. A flange 35F is formed on the outer ring of the bearing 35. The flange 35F is in contact with the upper surface of the support plate 52, and is fixed to the support plate 52 by bolts.

The casing part 53 is coaxially disposed on a central axis of the through-hole 52A of the support plate 52.

An inner diameter of a central hole 53H of the casing part 53 is slightly larger than a diameter of the flange 35F of the outer ring of the bearing 35. Accordingly, the flange 35F of the outer ring of the bearing 35 is housed at a lower side of the central hole 53H.

The spline nut 33 is disposed at an upper side of the central hole 53H via the bearing 36. The outer ring of the bearing 36 is fitted and disposed on an inner circumferential surface of the central hole 53H.

The ring member 54 is disposed on the upper end face of the casing part 53. A part of the ring member 54 is in contact with the outer ring of the bearing 36 while being fitted into the central hole 53H of the casing part 53. A flange 54F of the ring member 54 is in contact with the upper end face of the casing part 53, and is fixed to the casing part 53 by bolts.

The power generator 55 converts torque (mechanical energy) obtained by the rotation of the spline shaft 31 into electrical energy, and produces electric power.

The power generator 55 includes a magnet rotor 56 and a coil stator 57. The magnet rotor 56 is disposed between the two spline nuts 32 and 33. The coil stator 57 is disposed inside the casing part 53 of the fixing unit 50.

The magnet rotor (magnet part) 56 is sandwiched between end faces of the two spline nuts 32 and 33.

The magnet rotor 56 is not limited to being sandwiched between the two spline nuts 32 and 33. For example, the magnet rotor 56 may be coupled to the flanges 32F and 33F using fastening means such as bolts.

The magnet rotor 56 is disposed with a slight gap from the spline shaft 31. For this reason, the magnet rotor 56 is rotated about the central axis A together with the two spline nuts 32 and 33 as one body.

On the other hand, the magnet rotor 56 does not move even when the spline shaft 31 moves up or down, and is held in the fixing unit 50 together with the two spline nuts 32 and 33 as one body.

The magnet rotor 56 includes a plurality of magnets 56M. The plurality of magnets 56M are arranged around the central axis A at regular intervals in a circumferential direction. Each magnet 56M is held by a support member 56S to be exposed on an outer circumference side. The support member 56S is sandwiched between the end faces of the two spline nuts 32 and 33.

The coil stator (coil part) 57 is disposed inside the casing part 53. The coil stator 57 is disposed at an outer circumference side of the magnet rotor 56 with a slight gap so as to surround the magnet rotor 56.

The coil stator 57 includes a plurality of coils 57C. The plurality of coils 57C is arranged around the central axis A at regular intervals in a circumferential direction. Each coil 57C is disposed to be exposed on an inner circumference side of the central hole 53H of the casing part 53. A distance from the central axis A to a surface of each coil 57C is set to be approximately the same as a radius of the central hole 53H.

When the vertical shaft water wheel 10 receives the water W to rotate the spline shaft 31 about the central axis A, the two spline nuts 32 and 33 coupled to the spline shaft 31 are rotated about the central axis A. The magnet rotor 56 is also rotated about the central axis A together with the two spline nuts 32 and 33 as one body.

As the magnet rotor 56 is rotated about the central axis A relative to the coil stator 57, electromagnetic induction occurs between the magnet rotor 56 and the coil stator 57, and electric power is produced.

The water wheel positioning unit 60 is equipped with a coupling plate 61, a pair of electric cylinders 63, a water level sensor 64, and a drive controller (not shown) at an upper end of the spline shaft 31.

The coupling plate 61 is horizontally disposed via a bearing 62. The pair of electric cylinders 63 is disposed between the coupling plate 61 and the fixing unit 50. The water level sensor 64 detects a position of the water surface Ws (water level) of the irrigation canal C. The drive controller drives and controls the pair of electric cylinders 63 based on a detected result from the water level sensor 64.

The bearing 62 is fitted around the upper end of the spline shaft 31, and the coupling plate 61 of a plate shape is coupled to the upper end of the spline shaft 31 via the bearing 62. Thus, even when the spline shaft 31 is rotated, the coupling plate 61 is not rotated.

Rods 63A of the pair of electric cylinders 63 are coupled to both ends of the coupling plate 61.

The pair of electric cylinders (linear actuators) 63 are disposed in a vertical direction in symmetry with respect to the central axis A of the spline shaft 31.

Cylinder parts 63B of the pair of electric cylinders 63 are fixed to an upper surface of the ring member 54 of the fixing unit 50. The pair of electric cylinders 63 are equipped with brakes, and can hold positions (protrusion lengths) of the rods 63A protruding from the cylinder parts 63B.

The water level sensor 64 is an optical sensor that detects the position of the water surface Ws from the ground using a laser beam. Instead of the optical sensor, a pressure sensor that is disposed on the bottom of the irrigation canal C and measures the position of the water surface Ws from a hydraulic pressure of the water W may be used.

The drive controller (not shown) drives and controls the pair of electric cylinders 63 based on the detected result from the water level sensor 64. Thereby, a position of the spline shaft 31 can move up and down according to the water level. A sampling frequency for this control may have, for instance, a period of several minutes.

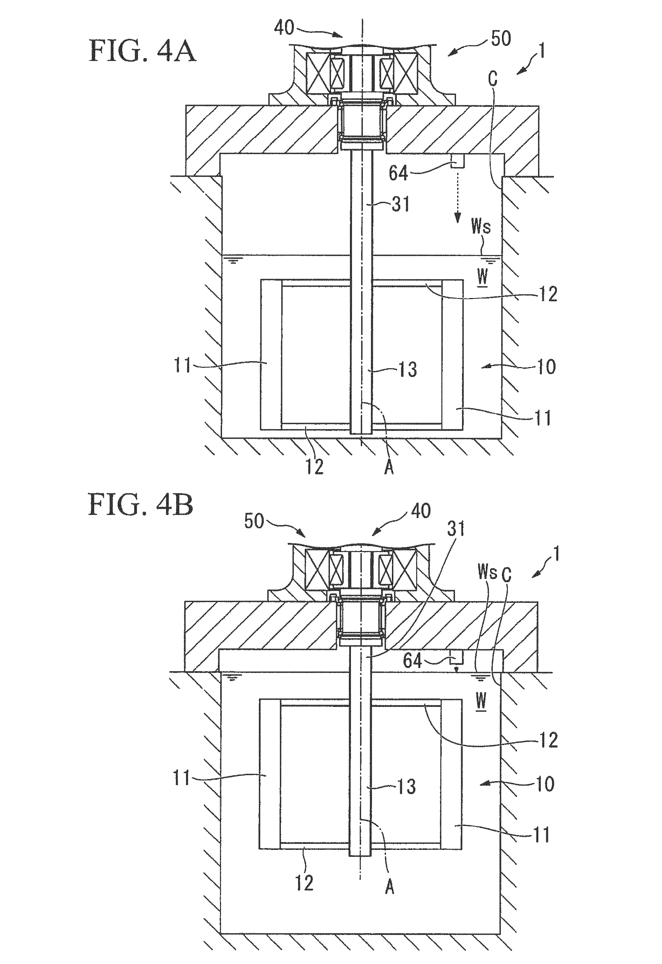

Fig. 4A is a view illustrating an operation of the vertical shaft hydroelectric power generation equipment I when the water level (water surface Ws) rises and falls, showing the case in which the water level of the water W flowing along the irrigation canal C is low.

Fig. 4B is a view illustrating an operation of the vertical shaft hydroelectric power generation equipment 1 when the water level (water surface Ws) rises and falls, showing the case in which the water level of the water W flowing along the irrigation canal C is high.

In the vertical shaft hydroelectric power generation equipment 1, the vertical shaft water wheel 10 is located below the water surface Ws. The vertical shaft water wheel 10 is completely submerged.

For this reason, the spline shaft 31 is also submerged at a lower end thereof. Meanwhile, since the spline shaft 31 coupled to the vertical shaft water wheel 10 is moved by the water wheel positioning unit 60, an upper end of the spline shaft 31 is always located higher than the water surface Ws (see Fig. 1).

The vertical shaft water wheel 10 receives the water W flowing along the irrigation canal C and is rotated about the central axis A. The spline shaft 31 coupled to the vertical shaft water wheel 10 is also rotated about the central axis A.

Thereby, the two spline nuts 32 and 33 disposed on the spline shaft 31 are rotated about the central axis A. Further, the magnet rotor 56 sandwiched by the two spline nuts 32 and 33 is also rotated about the central axis A.

The vertical shaft water wheel 10, the rotary ball spline bearings 40, and the magnet rotor 56 are rotated about the central axis A as one body. In this way, the rotation of the vertical shaft water wheel 10 is transmitted to the power generator 55 (or the magnet rotor 56) coupled to the rotary ball spline bearings 40.

As illustrated in Fig. 4A, when the water level of the water W flowing along the irrigation canal C falls, the movement guide unit 30 is operated by the water wheel positioning unit 60 in the vertical shaft hydroelectric power generation equipment 1, and moves the vertical shaft water wheel 10 down according to the water level. When the water level of the water W falls, the vertical shaft water wheel 10, the spline shaft 31, the coupling plate 61, and the rods 63A of the electric cylinders 63 integrally move downward.

The water wheel positioning unit 60 detects a change in the water surface Ws (a fall in the water level), and controls the electric cylinders 63 according to the change. Thus, the vertical shaft water wheel 10 and the spline shaft 31 are moved downward in the irrigation canal C according to the fall of the water level.

On the other hand, even when the water level of the water W falls, positions and attitudes of the spline nuts 32 and 33 and the power generator 55 are maintained with no change. Since the spline shaft 31 moves relative to the spline nuts 32 and 33, the positions and attitudes of the spline nuts 32 and 33 and the power generator 55 are not changed.

For the reason, even when the water level of the water W flowing along the irrigation canal C falls, the vertical shaft water wheel 10 is not exposed above the water surface Ws in the vertical shaft hydroelectric power generation equipment 1. Thus, the vertical shaft water wheel 10 uniformly receives the water W and is rotated. Therefore, the vertical shaft water wheel 10 can continue to maintain efficient power generation without suffering damage.

As illustrated in Fig. 4B, when the water level of the water W flowing along the irrigation canal C rises, the movement guide unit 30 is operated by the water wheel positioning unit 60 in the vertical shaft hydroelectric power generation equipment 1, and moves the vertical shaft water wheel 10 up according to the water level. When the water level of the water W rises, the vertical shaft water wheel 10, the spline shaft 31, the coupling plate 61, and the rods 63A of the electric cylinders 63 integrally move upward.

Since the water wheel positioning unit 60 detects a change in the water surface Ws (a rise in the water level), and controls the electric cylinders 63 according to the change. Thus, the vertical shaft water wheel 10 and the spline shaft 31 are moved upward in the irrigation canal C according to the rise of the water level.

As described above, even when the water level of the water W rises, positions and attitudes of the spline nuts 32 and 33 and the power generator 55 are maintained with no change. Since the spline shaft 31 moves relative to the spline nuts 32 and 33, the positions and attitudes of the spline nuts 32 and 33 and the power generator 55 are not changed.

For the reason, even when the water level of the water W flowing along the irrigation canal C rises, a position (submerged depth) of the vertical shaft water wheel 10 from the water surface Ws is constant in the vertical shaft hydroelectric power generation equipment 1. Thus, the vertical shaft water wheel 10 can uniformly receive the water W and continue to maintain efficient power generation.

As described above, even when the water level of the water W flowing along the irrigation canal C rises and falls, the movement guide unit 30 is operated by the water wheel positioning unit 60, and thus the vertical shaft hydroelectric power generation equipment 1 can place the vertical shaft water wheel 10 underwater at all times. For this reason, it is possible to reliably avoid a situation in which the vertical shaft water wheel 10 is exposed above the water surface Ws, receives uneven water power, and suffers damage. Thus, as the vertical shaft water wheel 10 is always placed underwater, the vertical shaft water wheel 10 uniformly receives the water W and is rotated. Therefore, it is possible to continue to maintain the efficient power generation.

Since the movement guide unit 30 has the rotary ball spline bearings 40, the vertical shaft hydroelectric power generation equipment 1 can smoothly move the vertical shaft water wheel 10 up and down according to the change of the water surface Ws.

The vertical shaft hydroelectric power generation equipment 1 can reliably transmit the rotation of the vertical shaft water wheel 10 to the power generator 55, and continue to maintain the efficient power generation.

Since the magnet rotor 56 of the power generator 55 is coupled to the spline nuts 32 and 33 of the movement guide unit 30 (or the rotary ball spline bearings 40), the rotation of the vertical shaft water wheel 10 can be reliably transmitted to the power generator 55.

Since the magnet rotor 56 of the power generator 55 is sandwiched by the pair of spline nuts 32 and 33, the magnet rotor 56 can be reliably coupled to the spline nuts 32 and 33.

Since the electric cylinders 63 are coupled to the movement guide unit 30 (or the spline shaft 31), the water wheel positioning unit 60 can actively and reliably submerge the vertical shaft water wheel 10 according to the change of the water level. Since the water wheel positioning unit 60 is disposed on the fixing unit 50, it has excellent maintainability.

Instead of the electric cylinders 63, other linear actuators may be used. For example, multistage or single-stage air cylinders may be used. For example, a linear motion mechanism combining a rotary motor and a ball screw may be used.

In this way, since a large variety of linear actuators can be used, it is possible to construct an appropriate water wheel positioning unit 160 according to weight of the vertical shaft water wheel 10.

Next, a first modified example of the water wheel positioning unit will be described.

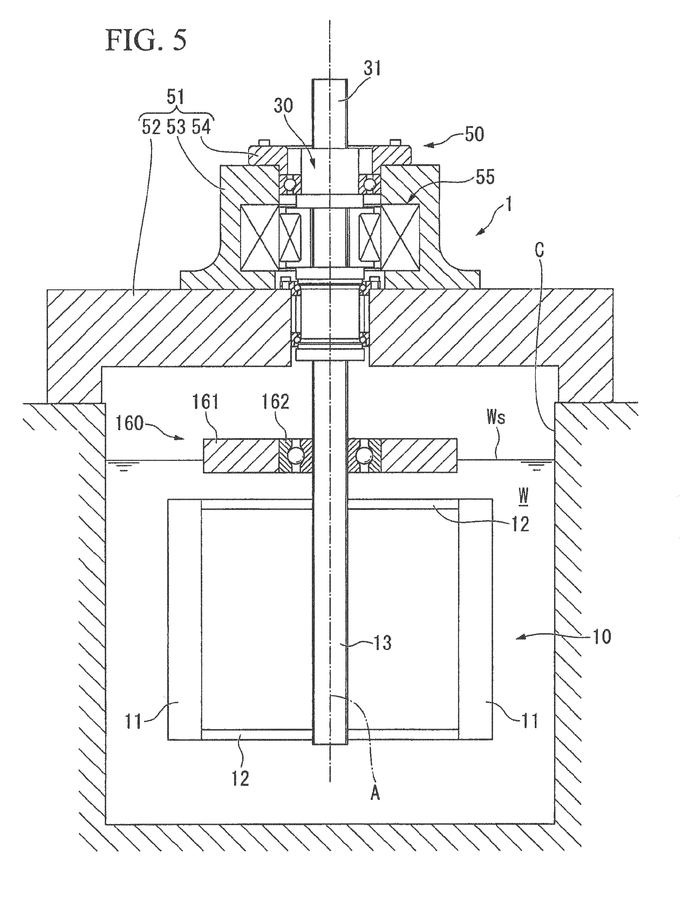

Fig. 5 is a view illustrating a first modified example of the water wheel positioning unit (i.e. a water wheel positioning unit 160).

The water wheel positioning unit 160 is made up of an annular float 161 disposed on an outer circumference side of a spline shaft 31, and a bearing 162 disposed between the spline shaft 131 and an inner circumferential surface of the float 161.

An inner ring of the bearing 162 is fixed to the spline shaft 31 at a side slightly higher than a vertical shaft water wheel 10. For example, a watertight bearing is used for the bearing 162.

The float (floating element) 161 is formed of, for instance, a synthetic resin material such as foamed styrene, and is a low-density member floating on a water surface Ws. The float 161 exposes an upper end of the spline shaft 31 above the water surface Ws due to buoyancy thereof.

A shape, the buoyancy, etc. of the float 161 may be adequately changed without submerging the upper end of the spline shaft 31. Accordingly, the float 161 is not limited to being formed of foamed styrene, and may be a bag body such as a swimming tube. The float 161 may be a tank-shaped member formed of a metal material.

In this way, since the float 161 exposes the upper end of the spline shaft 31 above the water surface Ws due to its own buoyancy, even when the water level (water surface Ws) rises and falls, the vertical shaft water wheel 10 coupled to a lower end of the spline shaft 31 is underwater at all times.

Since the float 161 is connected to the spline shaft 31 via the bearing 162 so as to be rotatable about a central axis A, even when the spline shaft 31 is rotated about the central axis A, the float 161 is not rotated. For this reason, rotation of the vertical shaft water wheel 10 is not impeded due to presence of the float 161. Therefore, a power generator 55 can receive torque (mechanical energy) from the vertical shaft water wheel 10 that rotates well without suffering a loss, and produce electric power. Accordingly, the vertical shaft hydroelectric power generation equipment 1 can perform efficient power generation.

Since the water wheel positioning unit 160 couples the float 161 to a movement guide unit 30 (or the spline shaft 31) via the bearing 162, the water wheel positioning unit 160 can reliably submerge the vertical shaft water wheel 10 according to a change in water level.

Since the annular float 161 is coupled to the spline shaft 31 (the vertical shaft water wheel 10) via the bearing 162, it is possible to perform the efficient power generation without impeding the rotation of the vertical shaft water wheel 10.

Since the power generator 55 does not rise and fall according to the water level, it has excellent maintainability. Since cables connected to the power generator 55 do not rise and fall, reliability is improved.

Next, a second modified example of the water wheel positioning unit will be described.

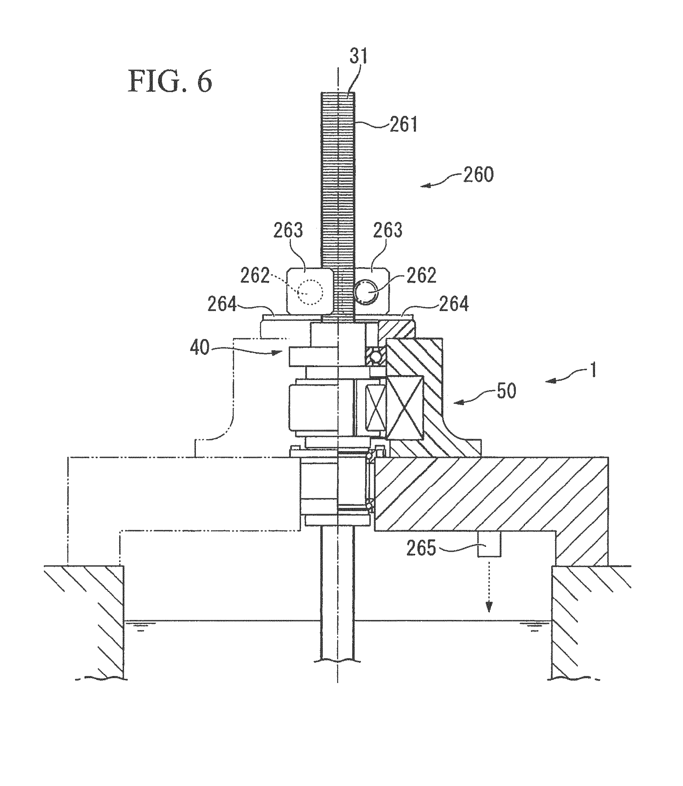

Fig. 6 is a view illustrating a second modified example of the water wheel positioning unit (i.e. a water wheel positioning unit 260).

The water wheel positioning unit 260 is equipped with a rack 261, a pair of pinion gears 262, a pair of rotary motors 263, a pair of linear motors 264, a water level sensor 265, and a drive controller (not shown).

The rack 261 is formed on an outer circumferential surface of an upper end of a spline shaft 31. The pair of pinion gears 262 are meshed with the rack 261. The pair of rotary motors 263 rotate the pair of pinion gears 262. The pair of linear motors 264 cause the pair of rotary motors 263 to be brought into close contact with or separated from the rack 261 (or the spline shaft 31). The water level sensor 265 detects a position of a water surface Ws (or a water level) of an irrigation canal C. The drive controller drives and controls the rotary motors 263 and the linear motors 264 based on a detected result from the water level sensor 265.

The rack 261 is formed on the entire outer circumferential surface (entire circumference) of the upper end of the spline shaft 31. The rack 261 is formed from near the upper end toward a lower side of the spline shaft 31 at a length (range) corresponding to a vertical movement distance of the spline shaft 31.

The pair of pinion gears 262 each have a rotating shaft directed in a horizontal direction, and are disposed in symmetry with respect to the central axis A of the spline shaft 31.

The pair of rotary motors (rotary actuators) 263 are directed in a horizontal direction, and are disposed on an upper surface of a ring member 54 of a fixing unit 50.

The pair of linear motors 264 are disposed between the pair of rotary motors 263 and the ring member 54. The pair of linear motors 264 are used to cause the pinion gears 262 coupled to the respective rotary motors 263 to be brought into close contact with or separated from the rack 261.

An anti-drop part (not shown) that prevents the spline shaft 31 from dropping when the pinion gears 262 coupled to the rotary motors 263 are separated from the rack 261 is provided.

Similar to the water level sensor 164, the water level sensor 265 is an optical sensor that detects a position of the water surface Ws from the ground using a laser beam. Instead of the optical sensor, a pressure sensor that is disposed on the bottom of the irrigation canal C and measures the position of the water surface Ws from a hydraulic pressure of the water W may be used.

When there is a change in the water level, the drive controller (not shown) drives the pair of linear motors 264 based on the detected result from the water level sensor 265, and brings the pinion gears 262 coupled to the rotary motors 263 into close contact with the rack 261 formed on the spline shaft 31. As the drive controller drives and controls the rotary motors 263, a position of the spline shaft 31 can move up and down according to the water level.

On the other hand, where there is no change in the water level, the drive controller (not shown) drives the pair of linear motors 264, and keeps the pinion gears 262 coupled to the rotary motors 263 separated from the spline shaft 31 (or the rack 261). A sampling frequency for this control may have, for instance, a period of several minutes.

Since the rack-and-pinion mechanism is coupled to the movement guide unit 30 (the spline shaft 31), the water wheel positioning unit 260 can actively and reliably submerge the vertical shaft water wheel 10 according to the change of the water level. Since the water wheel positioning unit 260 is disposed on the fixing unit 50, it has excellent maintainability.

As another modified example of the water wheel positioning unit, an eyebolt may be fastened to an upper end of the spline shaft 31, a crane may be coupled to the eyebolt and move the spline shaft 31 up and down.

The shapes and combinations of the constituent members described in the above embodiments are only examples, and can be modified in various manners depending on design requirements without departing from the scope of the present invention.

The vertical shaft water wheel 10 is not limited to the gyro-mill type. The vertical shaft water wheel 10 may be a straight blade type, a Darrieus type, a Savonius type, a paddle type, a cross-flow type, or an S-type rotor type.

The spline shaft and the spline nuts in the rotary ball spline bearing 40 can be modified. For example, instead of the spline shaft and the spline nuts, a feather key, serration, or a sliding spline may be used.

The rotary ball spline bearings 40 may be so-called end-cap-type ball spline bearings.

The example in which the rotating shaft 13 and the spline shaft 31 are formed of one shaft member has been described, but the present invention is not limited thereto. The rotating shaft 13 and the spline shaft 31 may be formed of separate shaft members, and the plurality of shaft members may be welded.

Similar to when the angular bearings 34 and 35 are directly incorporated into the spline nuts 32, the radial bearing 36 may be directly incorporated into the spline nuts 33.

The bearing 62 is not limited to the thrust bearing, and it may be an angular bearing.

### [Reference Signs List]

- 1: vertical shaft hydroelectric power generation equipment
- 10: vertical shaft water wheel (water wheel)
- 13: rotating shaft
- 30: movement guide unit
- 31: spline shaft (shaft)
- 32, 33: spline nut (barrel)
- 34, 35: angular bearing
- 36: radial bearing
- 40: rotary ball spline bearing
- 55: power generator
- 56: magnet rotor (magnet part)
- 57: coil stator (coil part)
- 60: water wheel positioning unit
- 61: float (floating element)
- 62: bearing
- 160: water wheel positioning unit
- 162: bearing
- 163: electric cylinder (linear actuator)
- 260: water wheel positioning unit
- 261: rack
- 262: pinion gear
- 263: rotary motor (rotary actuator)
- A: central axis (rotation center)
- C: irrigation canal
- W: water
- Ws: water surface, water level

## Claims

1. Hydroelectric power generation equipment comprising:
a water wheel disposed under a water surface;
a power generator configured to perform power generation using rotation of the water wheel;
a movement guide unit having a shaft coaxially disposed on a rotation center of the water wheel such that the shaft is movable in a direction of a rotating shaft of the power generator to transmit rotation of the shaft to the power generator; and
a water wheel positioning unit configured to move the shaft up or down according to a change in water level.

2. The hydroelectric power generation equipment according to claim 1, wherein the movement guide unit comprises:
a barrel configured such that the shaft is movable in the direction of the rotating shaft while being fitted onto the shaft so as to be non-rotatable about an axis; and
a bearing configured to rotatably support the barrel above a water surface.

3. The hydroelectric power generation equipment according to claim 2, wherein the power generator includes:
a magnet part coupled to the barrel; and
a coil part configured to surround an outer circumference side of the magnet part.

4. The hydroelectric power generation equipment according to any one of claims 1 to 3, wherein the water wheel positioning unit is a linear actuator coupled to the movement guide unit via the bearing.

5. The hydroelectric power generation equipment according to any one of claims 1 to 3, wherein the water wheel positioning unit comprises:
a rack formed on the movement guide unit;
a pinion engaged with the rack; and
a rotary actuator configured to rotate the pinion.

6. The hydroelectric power generation equipment according to any one of claims 1 to 3, wherein the water wheel positioning unit is a floating element coupled to the movement guide unit via the bearing.
